# EUROPEAN PATENT APPLICATION

(11) **EP 1 703 155 A1**
(43) Date of publication of application: **20.09.2006**
(21) Application number: 05113034.2
(22) Date of filing: 28.12.2005
(51) Int. Cl.: F16C 33/76, F16J 15/32

(54) **Sealing device for the hub of a heavy motor vehicle wheel**

(30) Priority: 16.03.2005 IT TO20050172
(71) Applicant: RFT S.p.A., 10121 Torino (IT)
(72) Inventor: Foti, Claudio, 14010 Dusino San Michele (Asti) (IT)
(74) Representative: Fioravanti, Corrado

(57) **Abstract**

The rotatable hub (10) has a cylindrical axial cavity (12) at an axially outer position with respect to a bearing (20-22). The hub is supported by a shaft (70) having an axially outer portion (72) detachable from an axially inner portion (71) fitted in the bearing. Inserted in the cavity (12) is a preassembled unit comprising an annular plate (80), axially lockable between the bearing (21) and a radial surface (74) of the outer shaft portion (72), and a sealing device (30) for sealing a gap (13) between the cylindrical cavity (12) and the outer shaft portion (72). The unit consists of two subassemblies. A first subassembly includes an annular metallic insert (32) fixed to a rubber body (33) forming a radially outer portion (331) for performing static sealing action against the cylindrical cavity (12) and a radially inner portion (333) for performing a dynamic sealing action against the plate (80). A second subassembly includes the annular plate (80) and a rubber body (35) fixed to the plate (80). The rubber body (35) forms a radially inner tubular portion (351) performing static sealing action against a cylindrical surface (73) of the shaft (72), and a portion (354) which projects in a radially outer direction for performing dynamic sealing action against the annular insert (32).

## Description

The present invention refers to a pre-assemblable unit comprising a sealing device to be mounted in the hub of a heavy motor vehicle wheel and a component for assembling and disassembling such device. The invention can be implemented with non-driven wheel of heavy motor vehicles, particularly but not exclusively, trailers.

Heretofore, in order to hermetically seal a bearing unit in the hub of a heavy motor vehicle wheel a sealing device is used which is composed of an annular metallic shield (called "flinger") fixed in the rotating hub, and an annular gasket mounted onto a stationary central shaft by means of an annular plate having a Z-shaped cross-section which allows to disassemble the gasket. The flinger is supplied separately to the wheel assembler, who has to use a press to force fit the flinger in a cylindrical cavity of the hub near a seat accommodating the bearing unit. The gasket comprises a metallic insert with an L-shaped cross-section on which there is vulcanized a body of rubber or elastomeric material forming two dynamic sealing lips that slide against the flinger. A radial sealing lip is usually pressed against the outer flinger by an expansion spring. The gasket is forcedly mounted on the annular plate, which has a Z-shape in order to form an outer seat for the gasket and a flange projecting in a radially inner direction. This flange remains axially clamped between the bearing unit and a shoulder formed by an axially outer part of the central shaft.

When the bearing has to be reached, for example to carry out periodical check and maintenance operations, the outer part of the shaft is disassembled from the inner part and pulled out as a unit with the annular plate and the gasket.

It is a primary object of the invention to provide a pre-assembled unit capable of fulfilling at the same time the requirements of:
- being mounted in the hub of a wheel through a single and easy manual operation, so as to dispense the assembler from having to use a press to force fit a conventional *flinger*;
- attain overall better sealing performances, both in terms of static sealing and dynamic sealing; and
- reduce the number of components, and therefore costs for manufacturing and assembling them.

It is a particular object of the invention to provide a unit with a sealing device having dynamic sealing lips always positioned correctly against their respective counterface surfaces, also after repeated assembling and reassembling operations.

Another object of the invention is to provide a unit of compact dimensions, indifferently applicable to new hubs or pre-existing hubs in which the conventional flinger can be left, since its removal would require special apparatus.

These and other objects and advantages, that will be better understood herein after, are accomplished according to the invention by a pre-assembled unit having the features defined in the appended claims.

The features and the advantages of the invention will be apparent from the detailed description of an embodiment thereof, made with reference to the appended drawings provided by way of non-limitative example, in which:
- figure 1 is a partial, axial cross-sectional view of a unit according to the invention mounted in the hub of the wheel of a heavy motor vehicle; and

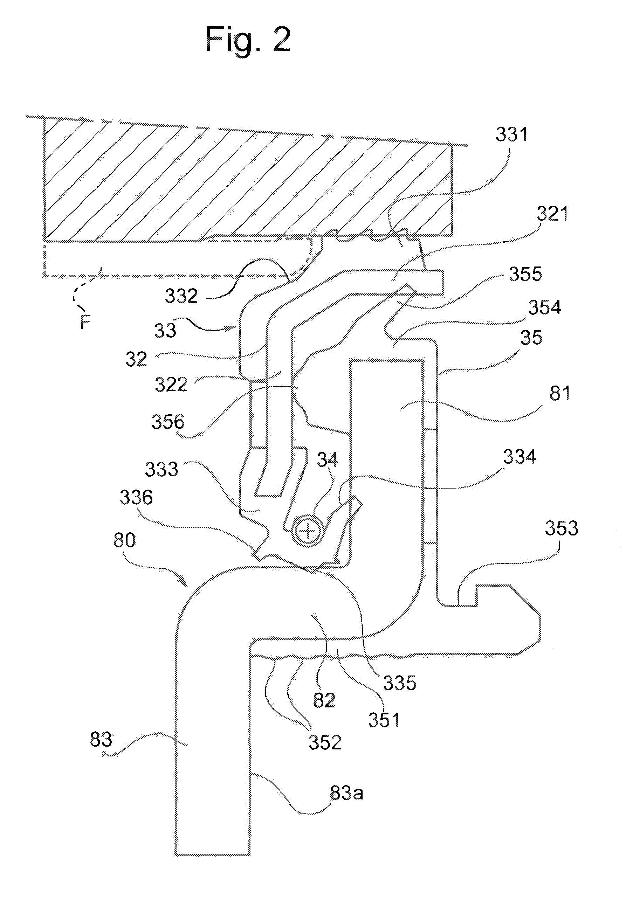

- figure 2 is a partial axial cross-sectional view, to an enlarged scale, of the unit according to the invention.

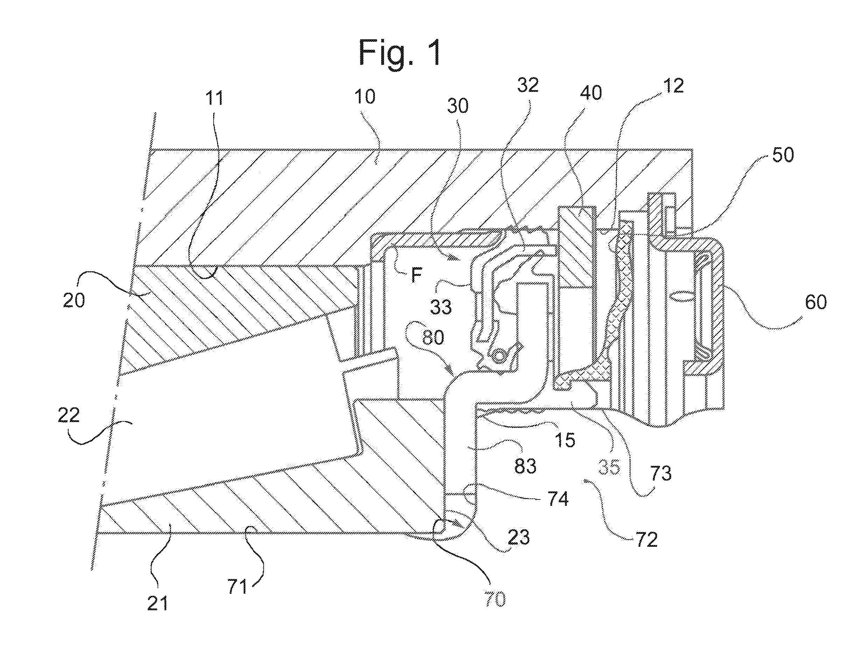

With reference initially to figure 1, a rotating hub 10 of the wheel of a heavy motor vehicle forms centrally a cylindrical seat 11 for a tapered roller bearing unit of conventional design having an outer rotatable race 20, an inner stationary race 21 and a plurality of rollers 22 interposed between the races 20 and 21. Towards the axially outer side (or outboard side) of the vehicle, the hub forms a lateral cylindrical cavity 12 of greater diameter than that of the central seat 11. The lateral cavity 12 accommodates a cassette sealing device 30, a circlip 40, a closure cap 50 of plastic material and a metallic phonic wheel or encoder 60 being part of a device for detecting rotational speed of the hub 10. A conventional metallic annular shield (or *flinger)* F, of the type discussed in the introductory part of the description, can also be found in the cavity 12.

A dual diameter shaft designated 70 consists of an axially inner part of smaller diameter 71 fitted co-axially in the inner stationary race 21 of the bearing unit, and an axially outer part of greater diameter 72. The two parts 71, 72 are usually formed by two distinctive members threadedly coupled with one another. The greater diameter part 72 has a substantially cylindrical surface 73 and a radial surface 74 facing an axially outer side surface 23 of the inner bearing race 21.

The sealing device 30 serves to seal the annular gap 13 between the hub cavity 12 and the shaft 70 to prevent external contaminants (water, dust, mud) from entering the inner parts of the bearing, and to prevent the lubricant grease, which is normally contained within the inner ambient of the bearing for lubricating the rolling surfaces, from leaking out.

The sealing device 30 comprises an annular metallic insert or shield 32 secured to the rotating hub 10. The insert 32 has an axial cross-section of inverted L shape with an axial cylindrical portion 321 extending in an axially outer direction, and a radial wall 322 extending in a radially inner direction towards the shaft 70.

An annular plate indicated at 80 has a Z-shape axial cross-section with a radially outer flange portion 81 extending in a radially outer direction towards the cavity 12 of the hub, a cylindrical axial portion 82 and a radially inner flange portion 83 which, in the assembled condition shown in the drawings, is axially interposed and clamped between the radial surface 74 of the shaft 70 and the surface 23 of the inner bearing race 21.

Vulcanized or co-moulded onto the insert 32 is a body 33 of rubber or elastomeric material forming on the cylindrical portion 321 a saw-toothed sealing gasket 331 that performs a static outer sealing action against the cylindrical cavity 12 of the hub. A bevel 332 is provided at the end of the sealing gasket 331 at the axially inner side, so as not to interfere with a possible pre-existing metallic annular shield or *flinger* F, as will be explained more clearly in the following. The body 33 forms a V-shaped dynamic sealing gasket 333 projecting in a radially inner direction from the radial wall 322. The gasket 333 has an elongate axial sealing lip 334 slidingly engaging the outer flange 81 of the plate 80, a radial sealing lip 335 engaging the cylindrical portion 82 of the plate 80, and a lip 336 performing labyrinth sealing action with the same cylindrical portion 82. Contact of the radial lip 335 is ensured by a circumferential spring 34.

Vulcanized or co-moulded to the plate 80 is a body 35 of rubber or elastomeric material forming a substantially tubular, inner static sealing portion 351 adapted to be interposed between the cylindrical portion 82 of the plate 80 and the cylindrical surface 73 of the shaft 70. In order to facilitate fitting the elastic body 35 over the shaft 70, undulations 352 are advantageously formed at the axially inner side of the cylindrical cavity of the tubular portion 351. On the outside, this tubular portion forms a radial groove 353 for retaining the plastic closure cap 50.

The rubber body 35 further forms a dynamic sealing gasket 354 with a radial sealing lip 355 projecting in a radially outer direction from the outer flange 81 and slidingly contacting the cylindrical wall 321 of the insert 32. The gasket 354 forms a plurality of discrete protuberances 356 (for example in the number of six-eight), circumferentially spaced from one another and projecting in an axially inner direction for abutting against the radial wall 322 of the opposite insert 32. The protuberances 356, that in the preferred embodiment are convex or rounded, serve to keep the correct axial distance between the shields 32 and the plate 80, and, consequently, a degree of axial preload or interference that is necessary for a correct operation of the elongate lip 334.

The unit of this invention consists of two subassemblies: a first subassembly including the metallic insert 32 with the rubber body 33, and a second subassembly including the annular plate 80 with the rubber body 35. The two subassemblies are manufactured separately and later assembled together, bringing the protuberances 356 in contact with the opposite wall 322.

The pre-assembled unit so obtained is then fitted manually in the cylindrical cavity 12 of a hub in which the bearing unit 20-22 and the axially inner part 71 of the shaft 70 have already been mounted. This manual insertion is facilitated by the saw-toothed formations of the outer, static sealing gasket 331. After the insertion, the inner side 83a of the inner flange 83 abuts against the outer side surface 23 of the inner bearing race 21. Then, the outer part 72 of the shaft is slipped through the tubular portion 351 of the rubber body 35. This operation is facilitated by the undulations 352 and a conical bevel 75 formed at the axially inner end of the cylindrical surface 73. The outer part 72 of the shaft is then threadedly coupled (in known manner) to the inner part 71, clamping the flange 83 axially between the radial facing surfaces 23 and 74.

The assembling is completed by mounting the circlip 40, the cover 50 and the phonic wheel 60.

It will be appreciated that the radial walls 322 and 81 are correctly spaced due to the protuberances 356, which ensure a correct arrangement of the axial lip 334. It should be noted that in the drawings the rubber bodies 33 and 35 are depicted in their non-deformed conditions.

When the inner parts of the bearing have to be reached, for example in order to carry out periodical maintenance, after removing the phonic wheel 60, the cover 50 and the circlip 40, the outer shaft part 72 is unscrewed to detach it from the inner part 71. The plate 80 remains mounted onto the outer shaft part 72 and is withdrawn as a unit therewith.

When the plate 80 with the rubber body 35 is then re-inserted into the cavity 12, walls 81 and 322 will reach a new relative position slightly closer as compared to the original one, owing to a possible wear (to a very small extent, however) of the protuberances 356. Anyway, this approach of the said walls does not affect the correct position of the dynamic sealing lips. In fact, the elongate lip 334 will contact the flange 81 with a tip zone different from the preceding one, and therefore not worn, and this tip zone will contact the flange 81 along a circle having a slightly greater diameter than the preceding one. As known to those skilled in the art, this favours sealing efficiency, since prolonged sliding contact tends to produce a track in the wall 81 that does not constitute an ideal counterface surface in terms of sealing action.

In summary, the invention offers the following advantages. The wheel assembler receives a pre-assembled unit that can be mounted easily in the hub of the wheel through a single manual operation without requiring special apparatus (such as presses), as is required instead for a conventional *flinger* F. The insertion is facilitated by the orientation of the saw-teeth, that effectively oppose the expulsion of the sealing device due to pressure developing within the bearing unit during operation. The rubber or elastomeric material which the body 32 is made of guarantees hermetic static sealing action against the cavity 12 of the hub.

The unit consists of only two subassemblies that can be handled and assembled together in a simple and cost-effective manner.

The axially compact dimensions of the unit allow to fit the unit also on pre-existing hubs without interfering with possible *flingers* F which are difficult to remove. These *flingers* can be left in position without interfering with the sealing device.

The protuberances 356 guarantee a correct working position of the dynamic sealing lips overtime, also after repeated assembling and re-assembling operations.

The invention is not intended to be limited to the embodiment described and illustrated herein, which should be considered as an example of implementation of the invention; rather, the invention may be modified with regard to the shape, dimensions and arrangement of parts, constructional details and materials used. For example, in a variant (not shown) of the invention, protuberances similar to those indicated herein at 356 may be formed by the rubber body 33 as an alternative or in addition to those formed by the rubber body 35.

## Claims

1. A pre-assemblable unit to be mounted in a rotatable hub of the wheel of a heavy motor vehicle, the hub (10) providing a cylindrical axial cavity (12) at an axially outer position with respect to a bearing (20-22), the unit including:
an annular plate (80) having a radially inner flange portion (83) axially lockable between the bearing (21) and a radial surface (74) of an axially outer shaft portion (72) detachable from an axially inner shaft portion (71) fitted centrally in the bearing;
a sealing device (30) for hermetically sealing a gap (13) between the cylindrical cavity (12) and the outer shaft portion (72);
**characterized in that** the unit consists of two subassemblies:
a first subassembly including a radially outer and rotatable annular metallic insert (32) fixed to a body of rubber or elastomeric material (33) forming a radially outer portion (331) for performing static sealing action against the cylindrical cavity (12) and a radially inner portion (333) slidingly contacting the plate (80) for performing a dynamic sealing action;
a second subassembly including the annular plate (80) and a body of rubber or elastomeric material (35) fixed to the plate (80) and forming
- a radially inner tubular portion (351) performing static sealing action, adapted for being interposed between a cylindrical portion (82) of the plate (80) and the cylindrical surface (73) of the shaft (72), and
- a portion (354), projecting in a radially outer direction from a radially outer flange (81) of the plate (80), and slidingly engaging the annular insert (32) for performing dynamic sealing action.

2. A unit according to claim 1, **characterized in that** the plate (80) and the insert (32) form respective radial walls (81, 322) axially facing one another, and that at least one (35) of the two rubber bodies (33, 35) forms, on one (81) of said walls, a plurality of protuberances (356) axially projecting towards the opposite wall (322) so as to keep the two walls axially spaced from one another.

3. A unit according to claim 2, **characterized by** comprising a plurality of said protuberances (356) distributed discretely and spaced circumferentially from one another.

4. A unit according to claim 2 or 3, **characterized in that** the protuberances (356) have convex or rounded surfaces for contacting the opposite radial wall (322).

5. A unit according to any one of the preceding claims, **characterized in that** the dynamic sealing portion (333) of the first rubber body (33) of the first subassembly forms a dynamic sealing gasket having a substantially V-shaped axial cross-section with an elongate axial sealing lip (334) slidingly engaging the radially outer flange (81) of the plate (80).

6. A unit according to claim 1, **characterized in that** the radially outer static sealing portion (331) of the first subassembly forms radially outer saw-toothed crests oriented so as to facilitate inserting the sealing device into the cylindrical cavity (12) in an axially inner direction.
